# EUROPEAN PATENT APPLICATION

(11) **EP 0 682 978 A1**
(43) Date of publication of application: **22.11.1995**
(21) Application number: 95303363.6
(22) Date of filing: 19.05.1995
(51) Int. Cl.: B01D 71/36, B01D 67/00

(54) **Hydrophilic PTFE membrane**

(30) Priority: 20.05.1994 US 247087
(71) Applicant: Pall Corporation, East Hills, New York 11548 (US)
(72) Inventor: Degen, Peter John, Huntington, New York 11743 (US); Lee, Joseph Yuen, South Setauket, New York 11720 (US)
(74) Representative: Hallybone, Huw George

(57) **Abstract**

The present invention provides a microporous membrane comprising a polytetrafluoroethylene microporous substrate, wherein the membrane has a critical wetting surface tension of at least about 70 dynes/cm (about 70 mN/m) after exposure to 170 °C for 3 minutes in air and after exposure to an aqueous 40% KOH solution for 10 days, and preferably also after exposure to an aqueous 30% H₂S0₄ solution and/or aqueous 30% HNO₃ solution for 10 days. The present inventive membrane preferably comprises a polytetrafluoroethylene microporous substrate and a crosslinked vinyl pyridine monomer which is bonded to the substrate. The present invention also provides a methods of preparing and using such a microporous membrane, as well as a filter element incorporating such a microporous membrane within a housing.

## Description

### TECHNICAL FIELD OF THE INVENTION

The present invention relates to microporous membranes and methods for their preparation. The present invention specifically relates to hydrophilic polytetrafluoroethylene membranes.

### BACKGROUND OF THE INVENTION

The use of hydrophilic membranes has been increasing over the years, particularly in the medical and pharmaceutical industry in such applications as liquid filtration, chemical separations, protein sequencing, and dialysis. While polytetrafluoroethylene (PTFE) membranes have been perceived as useful in many such applications, such membranes are inherently hydrophobic which can cause processing difficulties. There have been many attempts, therefore, to render PTFE membranes hydrophilic, which attempts have generally involved the graft polymerization of PTFE membranes with monomers which form hydrophilic polymeric coatings on such membranes.

Such graft polymerized hydrophilic PTFE membranes, however, have generally suffered from the disadvantage of losing their hydrophilicity upon exposure to high temperatures and harsh acidic and alkaline environments. Thus, the usefulness of such hydrophilic PTFE membranes has been somewhat limited.

Accordingly, there is a need for a PTFE membrane which has a high and stable surface energy and is therefore spontaneously wetted by most high surface tension fluids. Such a PTFE membrane would desirably maintain its high surface energy upon exposure to harsh temperature and chemical environments.

The present invention seeks to provide such a PTFE membrane which has a high surface energy and which retains that high surface energy upon exposure to high temperature and harsh acidic and alkaline environments. These and other objects and advantages of the present invention, as well as additional inventive features, will be apparent from the description of the invention provided herein.

### BRIEF SUMMARY OF THE INVENTION

The present invention provides a microporous membrane comprising a polytetrafluoroethylene microporous substrate, wherein the membrane has a critical wetting surface tension of at least about 70 dynes/cm (about 70 mN/m) after exposure to 170 °C for 3 minutes in air and after exposure to an aqueous 40% KOH solution for 10 days.

The present invention further provides a method of preparing a microporous membrane, comprising the steps of: (a) contacting a polytetrafluoroethylene microporous substrate with a grafting composition comprising vinyl pyridine and a crosslinking agent, and (b) exposing the substrate and the grafting composition in contact therewith to ionizing radiation such that the vinyl pyridine is crosslinked by the crosslinking agent and bonded to the substrate to provide a polytetrafluoroethylene microporous membrane having a critical wetting surface tension of at least about 70 dynes/cm (about 70 mN/m) after exposure to 170 °C for 3 minutes in air and after exposure to an aqueous 40% KOH solution for 10 days.

The present invention additionally provides a method of treating a fluid by passing the fluid through the present inventive membrane, as well as a filter element which comprises a housing and the present inventive membrane positioned therein.

### DETAILED DESCRIPTION OF THE INVENTION

The present invention provides a hydrophilic PTFE microporous membrane. The present inventive PTFE membrane has a high and stable surface energy such that it is spontaneously wetted by most high surface tension fluids. Moreover, this high surface energy is maintained by the present inventive PTFE membrane even after exposure to high temperature and caustic environments, preferably also acidic environments, while retaining the many benefits of a PTFE membrane. Thus, the present inventive PTFE membrane possesses the desirable characteristics of an unmodified PTFE membrane while being hydrophilic rather than hydrophobic.

In particular, the present invention provides a microporous membrane comprising a polytetrafluoroethylene microporous substrate, wherein the membrane has a critical wetting surface tension of at least about 70 dynes/cm (about 70 mN/m). The critical wetting surface tension remains at least about 70 dynes/cm (about 70 mN/m) even after exposure to 170 °C for 3 minutes in air, preferably after exposure to 250 °C for 5 minutes in air, and after exposure to an aqueous 40% KOH solution for 10 days. The critical wetting surface tension preferably also remains at least about 70 dynes/cm (about 70 mN/m) after exposure to an aqueous 30% H₂S0₄ solution and/or aqueous 30% HNO₃ solution for 10 days. The KOH, H₂S0₄, and HNO₃ solutions discussed herein are on a weight percent basis.

The PTFE microporous substrate can have any suitable properties, such as thickness and flow resistance. For many microfiltration applications, the PTFE substrate will typically have an average pore size ranging from about 0.01 µm to about 5 µm, advantageously from about 0.01 µm to about 0.5 µm, preferably from about 0.1 µm to about 0.3 µm, and most preferably about 0.2 µm. Such PTFE substrates will typically have a water flow rate of at least about 300 to about 1000 ml/min for a 144 mm diameter disc at an applied 4 psi (27.6 kPa) pressure. Suitable PTFE substrates can be prepared in accordance with U.S. Patents 3,953,566 and 4,187,390 and are also commercially available as, for example, Goretex® (W.L. Gore & Associates, Newark, Delaware) and Poreflon® (Sumitomo, Osaka, Japan).

While the present inventive membrane desirably has a critical wetting surface tension (CWST) of at least about 70 dynes/cm (about 70 mN/m), the present inventive membrane preferably has a CWST of at least about 75 dynes/cm (about 75 mN/m), more preferably at least about 80 dynes/cm (about 80 mN/m), and most preferably at least about 90 dynes/cm (about 90 mN/m). The CWST of a microporous membrane can be determined using the procedure disclosed in U.S. Patent 4,880,548.

Moreover, the present inventive membrane preferably has such high CWST values even after exposure to the high temperature and harsh chemical environments described above. Thus, the present inventive membrane preferably has a CWST of at least about 75 dynes/cm (about 75 mN/m), more preferably at least about 80 dynes/cm (about 80 mN/m), and most preferably at least about 90 dynes/cm (about 90 mN/m), after exposure to 170 °C for 3 minutes in air, preferably after exposure to 250 °C for 5 minutes in air, and after exposure to an aqueous 40% KOH solution for 10 days. The present inventive membrane also preferably has a CWST of at least about 75 dynes/cm (about 75 mN/m), more preferably at least about 80 dynes/cm (about 80 mN/m), and most preferably at least about 90 dynes/cm (about 90 mN/m), after exposure to an aqueous 30% H₂S0₄ solution and/or aqueous 30% HNO₃ solution for 10 days.

The CWST stability of the present inventive membrane upon exposure to high temperature and harsh chemical conditions may be determined by any suitable means, e.g., by placement in an oven at the indicated temperature for the indicated period of time and by immersion in the appropriate chemical solution for the indicated period of time. The present inventive membrane not only continues to have a relatively high CWST after exposure to high temperature and harsh chemical conditions, but the present inventive membrane preferably retains a CWST close to its initial CWST after exposure to such conditions. Specifically, the CWST of the present inventive microporous membrane after exposure to one or more of the aforesaid high temperature and harsh chemical conditions, i.e., its post-exposure CWST, preferably is at least about 80% of the CWST measured prior to exposure of the microporous membrane to the high temperature and harsh chemical conditions, i.e., its pre-exposure CWST. More preferably, the post-exposure CWST of the present inventive membrane is at least about 90%, and most preferably at least about 95%, of the pre-exposure CWST of the present inventive membrane.

The present inventive microporous membrane can be obtained by surface treating a PTFE microporous substrate with vinyl pyridine. Thus, the present inventive microporous membrane preferably comprises a PTFE microporous substrate and a crosslinked vinyl pyridine monomer which is bonded to the substrate. The vinyl pyridine may be crosslinked by any suitable crosslinking agent, typically a water-soluble crosslinking agent. The crosslinking agent preferably is selected from the group consisting of polyethylene glycol dimethacrylate, alkoxylated triacrylate, sodium diallyl oxyacrylate, and mixtures thereof. The crosslinking agent is most preferably polyethylene glycol dimethacrylate (PEGDMA).

The flow resistance through the present inventive membrane is preferably not significantly different from that of the unmodified PTFE substrate. At an applied 4 psi (27.6 kPa) pressure, the water flow rate (ml/min) through a 144 mm diameter disc of the present inventive membrane is desirably at least about 70%, preferably at least about 80%, more preferably at least about 90%, and most preferably at least about 95%, of the water flow rate through the unmodified PTFE substrate under the same conditions. Similarly, the flow resistance through the present inventive membrane is preferably not significantly changed by exposure of the membrane to one or more of the aforesaid high temperature and harsh chemical conditions described with respect to CWST. At an applied 4 psi (27.6 kPa) pressure, the post-exposure water flow rate (ml/min) through a 144 mm diameter disc of the present inventive membrane is desirably at least about 70%, preferably at least about 80%, more preferably at least about 90%, and most preferably at least about 95%, of the pre-exposure water flow rate of the present inventive membrane under the same conditions.

The present invention further provides a method of preparing a microporous membrane, which method comprises the steps of: (a) contacting a polytetrafluoroethylene microporous substrate with a grafting composition comprising vinyl pyridine and a crosslinking agent, and (b) exposing the substrate and the grafting composition in contact therewith to ionizing radiation such that the vinyl pyridine is crosslinked by the crosslinking agent and bonded to the substrate to provide a polytetrafluoroethylene microporous membrane having a critical wetting surface tension of at least about 70 dynes/cm (about 70 mN/m) after exposure to 170 °C for 3 minutes in air, preferably after exposure to 250 °C for 5 minutes in air, and after exposure to an aqueous 40% KOH solution for 10 days, preferably also after exposure to an aqueous 30% H₂S0₄ solution and/or aqueous 30% HNO₃ solution for 10 days. The nature of the PTFE substrate, vinyl pyridine, crosslinking agent, and CWST stability have been discussed above in connection with the microporous membrane per se.

While the grafting solution may comprise any suitable amounts of vinyl pyridine and crosslinking agent, the vinyl pyridine is preferably present in an amount ranging from about 2 wt.% to about 5 wt.% of the grafting solution, and the crosslinking agent is preferably present in an amount ranging from about 1 wt.% to about 2 wt.% of the grafting solution. The grafting solution preferably has sufficient vinyl pyridine and crosslinking agent such that exposure of the PTFE substrate to the grafting solution will result in substantially complete application of the liquid over the liquid wettable surface of the PTFE substrate and substantially complete graft polymerization of the vinyl pyridine over the liquid wettable surface of the PTFE substrate so as to achieve the desired CWST values of the modified PTFE substrate. In addition to the vinyl pyridine and crosslinking agent, the grafting solution will include one or more carriers. Any suitable carrier can be utilized, such as water, alcohols, and mixtures thereof. Preferred alcohols include ethyl and isopropyl alcohol.

The grafting solution can have any suitable pH. The pH of the grafting liquid is important in ensuring that a PTFE membrane is obtained which has a high and stable CWST upon exposure to harsh temperature and chemical environments. At unsuitable pH levels, precipitate or homopolymer gel can form on the surface of the PTFE substrate, and a low level of grafting, if any, occurs on the PTFE substrate. The grafting solution desirably has a pH of from about 5 to about 7, preferably from about 5.5 to about 6.5, and most preferably about 6. A pH adjusting agent can be utilized in the grafting solution in an amount sufficient to maintain the pH of the grafting liquid at the desired level. The pH adjusting agent is preferably an acid, more preferably an inorganic acid such as 1 N HCl which is added to the grafting solution in an amount sufficient to provide the grafting solution with a suitable pH, preferably a pH of about 6.

In carrying out the present inventive method, it is preferred that the PTFE substrate be prewetted with a preparatory agent which acts to render the substrate more amenable to subsequent processing. This prewetting can be accomplished by any known mechanical method, e.g., immersion or spraying, and preferably immersion, so long as substantially all of the liquid wettable surface of the membrane is wetted thereby. While any preparatory agent which does not adversely affect the properties of the present inventive membrane can be used, the preparatory agent is advantageously an alcohol, preferably methanol.

The PTFE substrate, still wet after the application of the preparatory agent, is contacted with the grafting solution so as to preferably ensure contact of the grafting solution with substantially all of the liquid wettable surface of the PTFE substrate. While the contact of the PTFE substrate with the grafting solution can be carried out in any suitable manner, e.g., immersion or spraying, the PTFE substrate is preferably immersed in the grafting solution. In particular, the PTFE substrate is advantageously configured into a jelly roll which is sufficiently loose such that the flow of liquid within the roll is not impeded, preferably by interleaving the PTFE substrate with a suitable porous material. A suitable material for interleaving with the substrate is Reemay® 2250 interleaf (available from Reemay, Inc., Hickory, Tennessee).

After contacting the PTFE substrate with the grafting solution, substantially all of the air within the substrate is preferably evacuated. The removal of air from the substrate may be carried out by any suitable means, such as by introducing the PTFE substrate and grafting liquid into a sealed vacuum chamber which is able to remove all of the air therein.

Subsequently, and preferably while the air has been evacuated from the PTFE substrate, the PTFE substrate and the grafting solution in contact with the substrate are exposed to ionizing radiation in an amount and under conditions such that the vinyl pyridine is crosslinked and bonds to the PTFE substrate, preferably such that the vinyl pyridine is polymerized over substantially all of the liquid wettable surface of the PTFE substrate. While the ionizing radiation can be of any type to effect the polymeric crosslinking and binding, e.g., alpha-rays, gamma-rays, ultraviolet radiation, and accelerated electron beam radiation, the ionizing radiation is preferably gamma rays. Gamma radiation is advantageously provided by a Cobalt-60 source. The total radiation dosage may be any suitable amount to effect the polymeric crosslinking and binding without significantly adversely affecting the PTFE membrane, e.g., typically at least about 0.2 Mrad and preferably at least about 0.4 Mrad up to about 3-4 Mrad. The grafting step, i.e., exposure of the liquid and substrate to ionizing radiation, may be carried out at any suitable temperature and is advantageously conducted at ambient temperature.

The resulting hydrophilic PTFE medium is then preferably rinsed to remove unreacted grafting solution, e.g., rinsed with a quantity of water and for a period of time so as to remove any unreacted vinyl pyridine, crosslinking agent, and grafting solution carrier. The rinsing is preferably carried out by flowing deionized water over and through the membrane for a period of about four hours. The grafted PTFE substrate is then dried, advantageously using heat, e.g., up to about 100 °C, until dry. Preferably, the PTFE medium is dried by exposing it to air at 100 °C for about ten minutes.

The present inventive membrane can be used in any suitable application. In view of the high and stable surface energy of the present inventive membrane, the present inventive membrane is particularly well-suited for use in high temperature and harsh chemical environments. The present inventive membrane has particular utility in the filtration of pharmacological liquids and the like, although the present inventive membrane can be used to filter any suitable fluid.

The present inventive membrane can be used alone or can be mated with a suitable support structure. Similarly, the present inventive membrane can be used in suitable filters, filtration cartridges, and the like. The present inventive membrane can be used in dead-end filtration applications, as well as in dynamic or cross-flow filtration applications.

The present inventive membrane is expected to be especially useful in filter elements, such as filter cartridges, which are generally described in U.S. Patent 4,340,479. Such filter elements will generally comprise a housing and the present inventive membrane positioned therein. Preferred filter elements utilizing the present inventive membrane comprise the present inventive membrane in sheet form, wherein the sides of the membrane have been overlapped and sealed to form a tubular configuration having an exterior surface, an interior, and two ends, and end caps sealed to the ends of the tube, wherein at least one of the end caps has a central aperture providing access to the interior of the tube, and all of the seals are fluid-tight.

The present inventive membrane is preferably corrugated in such a filter element so as to provide a large membrane surface area for the volume of the filter element. At least one of the sides of the membrane will typically be mated to a porous support layer, and, in such a situation, the membrane and porous support layer will generally both be corrugated. The filter element can comprise a single membrane of the present invention or, alternatively, comprises multiple such membranes mated together. The remainder of the filter element, e.g., the housing, end caps, and the like, may be of any suitable construction and prepared from any suitable material. For example, the remainder of the filter element can be prepared from a suitable polymeric material, such as a polyester, particularly polybutylene glycol terephthalate or polyethylene glycol terephthalate. The remainder of the filter element is preferably prepared from a polyolefin, such as polypropylene, which is stable under harsh chemical conditions, such as exposure to highly acidic and/or basic environments. The filter element can be constructed using techniques which are well-known in the art.

The following examples further illustrate the present invention but, of course, should not be construed as in any way limiting its scope as defined by the claims.

### Example 1

This example illustrates the preparation of a PTFE microporous membrane of the present invention.

A PTFE substrate with an average pore size of 0.2 µm was prewet with methanol and rolled, using a Reemay® 2250 interleaf, into a jellyroll configuration. The roll was introduced into a test tube containing a grafting solution comprising vinyl pyridine (VP), PEGDMA, deionized water, and sufficient 1 N HCl to obtain a pH of 6.0 ± 0.1. The relative weight percentages of the components of the grafting solution are set forth in Table 1. After the roll was wetted by the grafting solution, a vacuum was applied to the test tube to remove any air, and the test tube was stoppered so as to prevent the re-entry of air. The contents of the test tube were then irradiated in a Cobalt-60 vault at a dose rate of 10,000 rad/hr to yield the total radiation dose set forth in Table 1. After irradiation, the grafted PTFE substrate was rinsed in a deionized water trough for 4 hours and dried at 100 °C for 10 minutes.

Four experimental runs were completed, and the CWST of the membrane in each experimental run was determined both before and after placing the membrane in an oven maintained at 170 °C for 3 minutes in air. The water flow through the membrane of each experimental run was also determined by passing water at an applied 4 psi (27.6 kPa) pressure through a 144 mm diameter disc of the membrane after exposure of the membrane to the 170 °C oven for 3 minutes in air. The characteristics of each of the membranes are set forth in Table 1, along with the characteristics of an untreated PTFE control membrane.

**Table 1**

| Sample | Formulation | Total Dose (Mrad) | Initial CWST (dyne/cm or mN/m) | Post-exposure CWST (dyne/cm or mN/m) | Post-Exposure Water Flow (ml/min) |
|---|---|---|---|---|---|
| 1A | 4% VP/1.5% PEGDMA | 0.4 | 90 | 90 | 950 |
| 1B | 4% VP/1.5% PEGDMA | 0.4 | 90 | 90 | 950 |
| 1C | 3% VP/1.5% PEGDMA | 0.2 | 90 | 90 | 1100 |
| 1D | 3% VP/1.5% PEGDMA | 0.2 | 90 | 90 | 1000 |
| - | Untreated PTFE Control | - | 30 | 30 | 1000 |

These results demonstrate that, unlike the untreated PTFE membrane, the present inventive PTFE membrane has a high CWST which is retained even after high temperature exposure. The present inventive PTFE membrane also substantially retains the flow characteristics of the untreated PTFE substrate.

### Example 2

This example illustrates the effect of the pH of the grafting solution on the preparation of the present inventive microporous membrane.

The procedure as set forth in Example 1 was repeated, except that the grafting liquid in the test tube comprised 3.3 wt.% VP and 1.5 wt.% PEGDMA, with the remainder being deionized water and sufficient 1 N HCl to obtain various pH's. Five experimental runs were completed, with the grafting liquid of each run having a different pH between 4 and 8 as indicated in Table 2.

After completion of the grafting, irradiation, and rinsing steps, the resulting PTFE membrane was dried at 100 °C for 10 minutes. The CWST of the membrane prepared in each experimental run was then measured. The water flow through the membrane of each experimental run was also determined by passing water at an applied 4 psi (27.6 kPa) pressure through a 144 mm diameter disc of the membrane. In addition, a visual inspection of the membrane was undertaken to establish the presence or absence of gel or precipitate formation on the membrane. The CWST, water flow, and results of the visual inspection of each membrane are set forth in Table 2, along with the characteristics of an untreated PTFE control membrane.

**Table 2**

| Sample | pH | Observations After Grafting | CWST (dyne/cm or mN/m) | Water Flow (ml/min) |
|---|---|---|---|---|
| 2A | 4 | Gelled, cannot separate | 90 | 0 |
| 2B | 5 | Large quantity of gel | 90 | 200 |
| 2C | 6 | Clear solution | 90 | 600 |
| 2D | 7 | White precipitate | 90 | 350 |
| 2E | 8 | Large quantity of precipitate | 90 | 200 |
| Control | - | Untreated PTFE Control | 30 | 600 |

As the above data demonstrates, the use of a grafting liquid of about pH 6 provides a PTFE microporous membrane of high surface energy without any gel or precipitate formation. Surprisingly, the use of a grafting liquid having a pH even moderately different than the preferred value of 6 leads to a significant decrease in water flow capability as compared to an ungrafted PTFE membrane.

### Example 3

This example compares the stability of the high CWST of the present inventive microporous membrane at elevated temperature with that of two commercially available PTFE membranes which were conventionally treated to render them hydrophilic.

The membranes prepared in Example 2 were mounted onto a steel frame and placed into an air-circulated oven having a temperature of 250 °C for 5 minutes. The membranes were then allowed to cool to room temperature. For purposes of comparison, samples of 0.2 µm pore rated Durapore® polyvinylidene fluoride (Millipore, Bedford, Massachusetts) and 0.2 µm pore rated Poreflon® PTFE (Sumitomo, Osaka, Japan), which are commercially available in a hydrophilic state as a result of a treatment different from that of the present invention as described in Example 2, were also evaluated in the same manner. After cooling, the CWST of each of the various media was measured. The CWST results are provided in Table 3.

**Table 3**

| Sample | Initial CWST (dyne/cm or mN/m) | CWST after 5 min at 250°C (dyne/cm or mN/m) |
|---|---|---|
| 2A | 90 | 90 |
| 2B | 90 | 90 |
| 2C | 90 | 90 |
| 2D | 90 | 90 |
| 2E | 90 | 90 |
| Durapore® | 79-90 | 30 |
| Poreflon® | 79-83 | 37 |

As the above data demonstrates, the Durapore® and Poreflon® conventional membranes did not retain their original hydrophilicity after their exposure to a temperature of 250 °C for 5 minutes in air, while the PTFE membrane of the present invention retained its high surface energy after such high temperature exposure.

### Example 4

This example further illustrates the high and stable surface energy of the PTFE membrane of the present invention upon exposure to elevated temperatures, as well as the good flow resistance of such a PTFE membrane.

A PTFE substrate having an average pore size of 0.2 µm was prewet with methanol and rolled, using a Reemay® 2250 interleaf, into a jellyroll configuration. The jellyroll was introduced into a test tube containing a grafting solution comprising 3.3 wt.% VP and 1.5 wt.% PEGDMA, with the remainder comprising deionized water and sufficient 1 N HCl to obtain a pH of 6.0 ± 0.1. A vacuum was then applied to the test tube to remove any air, and the test tube was sealed. The test tube containing the PTFE substrate and grafting solution was irradiated at a rate of 20,000 rad/hr for 25 hours to a total dosage of 0.5 Mrad. The resulting grafted PTFE membrane was washed for 16 hours using deionized water.

Each of four such grafted PTFE membranes was exposed to a different temperature in air ranging from about 315 °C (sample 4A) to about 150 °C (sample 4D) for about 2-3 minutes under restraint. A 0.2 µm pore rated PTFE control membrane was left untreated with grafting solution but was otherwise washed with deionized water and exposed to about 315 °C for about 2-3 minutes under restraint. The CWST and water flow (at an applied 4 psi (27.6 kPa) pressure through a 144 mm diameter disc) properties of each of the membranes were determined after being challenged at the indicated temperature, and the results are set forth in Table 4.

**Table 4**

| Sample | Temperature (°C) | CWST (dyne/cm or mN/m) | Water Flow (ml/min) |
|---|---|---|---|
| 4A | 315 | 90 | 500 |
| 4B | 260 | 81-90 | 350 |
| 4C | 205 | 81-90 | 350 |
| 4D | 150 | 81-90 | 375 |
| Untreated PTFE Control | 315 | 30 | 600 |

These results demonstrate that, unlike the untreated PTFE membrane, the present inventive PTFE membrane has a high surface energy which is retained even after high temperature exposure. The present inventive PTFE membrane also substantially retains the flow characteristics of the untreated PTFE substrate even after high temperature exposure.

### Example 5

This example compares the stability of the high CWST and flow resistance of the present inventive microporous membrane under harsh chemical conditions with that of two commercially available PTFE membranes which were conventionally treated to render them hydrophilic.

The PTFE membrane of sample 2C from Example 2 was cut into three 6-inch x 6-inch (about 15.2 cm x 15.2 cm) pieces, with each piece being placed into one of three beakers for 10 days. The first of the three beakers contained an aqueous 30% H₂S0₄ solution, the second beaker contained an aqueous 30% HNO₃ solution, and the third beaker contained an aqueous 40% KOH solution. Samples of 0.2 µm pore-rated Durapore® and Poreflon® conventional membranes described in Example 3 were also subjected to the same conditions. The CWST and water flow properties of each of the membranes were determined, both before and after such chemical exposure, and the results are set forth in Table 5.

**Table 5**

| | Pre-exposure | | After 10 Days of Chemical Exposure | | |
|---|---|---|---|---|---|
| Sample | CWST (dyne/cm or mN/m) | Water Flow (ml/min) | Chemical | CWST (dyne/cm or mN/m) | Water Flow (ml/min) |
| Sample 2C | 90 | 600 | HNO₃ | 90 | 600 |
| Durapore® | 90 | 370 | HNO₃ | 75 | 275 |
| Poreflon® | 83 | 530 | HNO₃ | 81 | 480 |
| Sample 2C | 90 | 600 | H₂SO₄ | 90 | 600 |
| Durapore® | 90 | 370 | H₂SO₄ | 75 | 350 |
| Poreflon® | 83 | 530 | H₂So₄ | 81 | 470 |
| Sample 2C | 90 | 600 | KOH | 90 | 650 |
| Durapore® | 90 | 370 | KOH | 90 | 390 |
| Poreflon® | 83 | 530 | KOH | 81 | 200 |

The data in Table 5 indicate that both the Durapore® and Poreflon® membranes experience degradation in performance (as indicated by a decrease in both CWST and water flow) after being exposed to various chemicals. In addition, after 10 days of exposure to the 40% KOH solution, the Durapore® membrane became dark and brittle. In sharp contrast, there was no significant decrease in mechanical properties, hydrophilicity, or water-flow properties of the PTFE membrane of the present invention after its exposure to the various chemicals.

All of the documents cited herein, including patents, are hereby incorporated in their entireties by reference.

While this invention has been described with an emphasis upon preferred embodiments, it will be obvious to those of ordinary skill in the art that variations of the preferred products and processes may be used and that it is intended that the invention may be practiced otherwise than as specifically described herein. Accordingly, this invention includes all modifications encompassed within the spirit and scope of the invention as defined by the following claims.

## Claims

1. A microporous membrane comprising a polytetrafluoroethylene microporous substrate, wherein said membrane has a critical wetting surface tension of at least about 70 mN/m after exposure to 170 °C for 3 minutes in air and after exposure to an aqueous 40% KOH solution for 10 days.

2. The microporous membrane of claim 1, wherein said membrane has a critical wetting surface tension of at least about 70 mN/m after exposure to an aqueous 30% H₂S0₄ solution for 10 days.

3. The microporous membrane of claim 1 or 2, wherein said membrane has a critical wetting surface tension of at least about 70 mN/m after exposure to an aqueous 30% HNO₃ solution for 10 days.

4. The microporous membrane of any of claims 1-3, wherein said membrane has a critical wetting surface tension of at least about 70 mN/m after exposure to 250 °C for 5 minutes in air.

5. The microporous membrane of any of claims 1-4, wherein said membrane has a water flow rate of at least about 70% of the water flow rate of said substrate, wherein said water flow rate is measured at an applied 27.6 kPa pressure through a 144 mm diameter disc of said membrane and said substrate.

6. The microporous membrane of any of claims 1-5, wherein said membrane after said exposures has a water flow rate of at least about 70% of the water flow rate of said membrane prior to said exposures, wherein said water flow rate is measured at an applied 27.6 kPa pressure through a 144 mm diameter disc of said membrane.

7. The microporous membrane of any of claims 1-6, wherein the critical wetting surface tension of said membrane after said exposures is at least about 80% of the critical wetting surface tension of said membrane prior to said exposures.

8. The microporous membrane of any of claims 1-7, wherein said membrane further comprises crosslinked vinyl pyridine monomer bonded to said substrate.

9. A method of preparing a microporous membrane, comprising the steps of:
(a) contacting a polytetrafluoroethylene microporous substrate with a grafting composition comprising vinyl pyridine and a crosslinking agent, and
(b) exposing said substrate and said grafting composition in contact therewith to ionizing radiation such that said vinyl pyridine is crosslinked by said crosslinking agent and bonded to said substrate to provide a polytetrafluoroethylene microporous membrane having a critical wetting surface tension of at least about 70 mN/m after exposure to 170 °C for 3 minutes in air and after exposure to an aqueous 40% KOH solution for 10 days.

10. The method of claim 9, wherein said grafting solution has a pH of from about 5 to about 7.

11. A method of treating a fluid, which method comprising passing a fluid through a microporous membrane of any of claims 1-8.

12. A filter element comprising a housing and a microporous membrane of any of claims 1-8 therein.
